# EUROPÄISCHE PATENTANMELDUNG

(11) **EP 0 924 599 A1**
(43) Veröffentlichungstag der Anmeldung: **23.06.1999**
(21) Anmeldenummer: 98123862.9
(22) Anmeldetag: 16.12.1998
(51) Int. Cl.: G06F 7/58

(54) **Verfahren zur Erzeugung von Zufallszahlen**

(30) Priorität: 18.12.1997 DE 19756386
(71) Anmelder: Secunet Security Networks GmbH, 45138 Essen (DE)
(72) Erfinder: Smolik, Ludek Dr. Dipl.-Phys., 57072 Siegen (DE); Ohliger, Ilja Dipl.-Phys., 57076 Siegen (DE)
(74) Vertreter: Masch, Karl Gerhard, Dr.

(57) **Zusammenfassung**

Verfahren zur Erzeugung von Zufallszahlen, wobei aus terrestrischen und/oder extraterrestrischen zufälligen physikalischen Ereignissen resultierende stochastische Signale von einer Empfangseinrichtung registriert werden. Die registrierten und ausgewerteten Signale werden einem Zufallszahlengenerator als stochastische Eingangsparameter zugeführt und in dem Zufallszahlengenerator mit einem Algorithmus zu Zufallszahlen verarbeitet.

## Beschreibung

Die Erfindung betrifft ein Verfahren zur Erzeugung von Zufallszahlen. - Zufallszahlen werden regelmäßig in einem Rechenwerk bzw. Rechner erzeugt, wobei nach einem vorgegebenen Programmablauf durchgeführte Rechenoperationen zu den Zufallszahlen führen. Mit anderen Worten werden die Zufallszahlen mit Hilfe vorgegebener Algorithmen erhalten. Die entsprechenden Vorrichtungen bzw. die entsprechende Hardware wird als Zufallszahlengenerator bezeichnet.

Bei dem aus der Praxis bekannten Verfahren der eingangs genannten Art, von dem die Erfindung ausgeht, werden in einem Zufallszahlengenerator wechselnde Eingangsgrößen mit vorgegebenen Algorithmen zu den Zufallszahlen verarbeitet. Zur Erzeugung der Zufallszahlen werden den Algorithmen Eingangsgrößen zugeführt, die bestimmten Datenquellen entstammen, deren Ausgabedaten sich periodisch wiederholen. Mit anderen Worten wiederholen sich die den Datenquellen entstammenden Eingangsgrößen bzw. Zahlen bezüglich ihrer zeitlichen Abfolge periodisch. Dies führt dazu, daß die Eingangsgrößen deterministisch vorhersagbar sind. Daraus resultiert aber auch eine Vorhersagbarkeit der erzeugten Zufallszahlen. Insoweit werden mit dem bekannten Verfahren lediglich Pseudozufallszahlen generiert.

Demgegenüber liegt der Erfindung das technische Problem zugrunde, ein Verfahren der eingangs genannten Art anzugeben, mit dem nicht vorhersagbare Zufallszahlen erzeugt werden können.

Zur Lösung dieses technischen Problems lehrt die Erfindung ein Verfahren zur Erzeugung von Zufallszahlen, wobei aus terrestrischen und/oder extraterrestrischen zufälligen physikalischen Ereignissen, insbes. die aus physikalischen Zerfallsvorgängen, resultierende stochastische Signale von einer Empfangseinrichtung registriert werden und wobei die registrierten und ausgewerteten Signale einem Zufallszahlengenerator als stochastischer Eingangsparameter zugeführt werden und in dem Zufallszahlengenerator mit einem Algorithmus zu Zufallszahlen verarbeitet werden.

Physikalische Zerfallsvorgänge meint im Rahmen der Erfindung vorzugsweise radioaktive Zerfälle von Teilchen bzw. Zerfälle von Elementarteilchen. Signale meint in diesem Zusammenhang vorzugsweise die Zerfallsprodukte in Form von Teilchen. Nach bevorzugter Ausführungsform der Erfindung werden als Signale bzw. Zerfallssignale die Zerfallsprodukte von natürlichen und/oder künstlichen Isotopen terrestrischen Ursprungs registriert. Nach einer weiteren bevorzugten Ausführungsform der Erfindung werden als Zerfallssignale die Zerfallsprodukte aus Wechselwirkungen extraterrestrischer Strahlung mit der Erdmaterie registriert. Signale meint im Rahmen der Erfindung vorzugsweise auch die aus physikalischen bzw. radioaktiven Zerfallsvorgängen resultierende elektromagnetische Strahlung, beispielsweise Gammastrahlung. Grundsätzlich können für die erfindungsgemäße Erzeugung von Zufallszahlen beliebige physikalische Ereignisse gewählt werden, sofern diese zufällig auftreten und registrierbare stochastische Signale erzeugen. Insoweit liegt es auch im Rahmen der Erfindung, stochastisch auftretende elektromagnetische Wellen, beispielsweise bestimmter Frequenz, zu registrieren und als stochastische Signale einzusetzen.

Die registrierten Signale werden zweckmäßigerweise elektronisch verarbeitet bzw. ausgewertet, so daß bevorzugt genormte elektronische Signale zur Verfügung stehen. Die registrierten und elektronisch ausgewerteten Signale werden vorzugsweise über eine Schnittstelle einem Rechenwerk, beispielsweise über eine parallele Schnittstelle einem üblichen Rechner zugeführt. Das Rechenwerk bzw. der Rechner weist einen Zufallszahlengenerator auf, dem die Signale als stochastische Eingangsparameter zugeführt werden. Beim Eingang eines solchen stochastischen Eingangsparameters wird vorzugsweise der momentane Informationszustand eines zyklischen Speichermediums des Zufallszahlengenerators geändert. Zweckmäßigerweise wird ein n-Bit langes Schieberegister an m zufällig definierten Stellen k; geändert, wobei i = 1, 2, 3 .... n gilt. Dabei gilt n ≥ m ≥ 0. Die auf diese Weise erzeugte neue Gesamtinformation des Speichermediums wird als neue stochastische Eingangsgröße verwendet und mit den Algorithmen des Zufallszahlengenerators zu den Zufallszahlen verarbeitet. Zweckmäßigerweise wird bis zur nächsten Registrierung eines Signals und bis zur nächsten Zuführung des entsprechenden stochastischen Eingangsparameters der zyklische Speicher mit der Taktfrequenz des Rechenprogrammes zyklisch rotiert. Dabei wird vorzugsweise eine neue zufällige Zahl m sowie eine neue Menge kᵢ definiert. - Mit anderen Worten wird bevorzugt nach Jeder Registrierung eines Signals die Eingangsgröße für die Algorithmen des Zufallszahlengenerators geändert, wobei die nächste Änderung der Eingangsgröße vorzugsweise erst durch das zeitlich darauffolgende Signal stattfindet. Nach bevorzugter Ausführungsform der Erfindung entspricht somit die eigentliche "Zufallsgröße" dem zeitlichen Abstand zweier aufeinanderfolgender registrierter Signale. In den genannten zeitlichen Abständen wird als Folge der jeweils registrierten Signale der Zufallszahlengenerator jeweils gleichsam neu initialisiert bzw. mit einer neuen Ausgangsinformation zur Generierung der Zufallszahlen versorgt. Aufgrund der Zufälligkeit der physikalischen Ereignisse sind auch die Zeitspannen zwischen den empfangenen Signalen stochastisch verteilt. Dementsprechend weisen die Zeitabstände zwischen den Signalen keine Periodizität auf, so daß die Vorhersagbarkeit der Zufallszahlen unmöglich ist. - Im Rahmen der Erfindung ist es nicht zwingend erforderlich, daß jedes empfangene Signal dem Zufallszahlengenerator als stochastischer Eingangsparameter zugeführt wird. Es liegt auch im Rahmen der Erfindung, beispielsweise nur jedes zweite oder dritte usw. Signal als stochastischen Eingangsparameter zu verwenden.

Der Erfindung liegt die Erkenntnis zugrunde, daß durch die erfindungsgemäße Kombination der Resultate zufälliger physikalischer Ereignisse mit einem Algorithmus eines Zufallszahlengenerators Zufallszahlen erzeugt werden können, die nicht mehr vorhersagbar sind. Dadurch, daß die physikalischen Ereignisse zufällig auftreten und die daraus resultierenden Signale stochastischer Natur sind, haben auch die Eingangsparameter bzw. Eingangsgrößen für den Zufallszahlengenerator stochastischen Charakter und weisen somit im Gegensatz zu den bekannten Maßnahmen keine Periodizität auf. Die stochastischen Eingangsparameter können ohne weiteres mit den Algorithmen eines herkömmlichen Zufallszahlengenerators zu den Zufallszahlen verarbeitet werden. Im Gegensatz zu dem eingangs erläuterten bekannten Verfahren sind die Eingangsparameter für den Zufallszahlengenerator deterministisch nicht vorhersagbar. Aufgrund der erfindungsgemäßen Verfahrensweise kann die zur Durchführung des Verfahrens eingesetzte Vorrichtung auch als "physikalischer Zufallszahlengenerator" bezeichnet werden. Durch die erfindungsgemäße Wahl eines zufälligen physikalischen Ereignisses als Ausgangspunkt können "echte" Zufallszahlen generiert werden.

Die Erfindung zeichnet sich durch den Vorteil aus, daß die erzeugten echten Zufallszahlen beispielsweise zur Erzeugung von kryptographischen Schlüsseln in der Kryptographie verwendet werden können. Durch die fehlende Periodizität der Eingangsgrößen und die Unvorhersagbarkeit der Zufallszahlen wird der Betrieb eines Schlüsselgenerators ermöglicht, der gleichsam nicht reproduzierbar ist. Das heißt, eine exakte Kopie des Schlüsselgenerators mit der gleichen Hardware und den gleichen Algorithmen kann nicht die gleiche Folge von Schlüsseln erzeugen. - Nach bevorzugter Ausführungsform der Erfindung wird die Qualität der erzeugten Zufallszahlen mit einem Algorithmus des Zufallszahlengenerators überprüft.

Nachfolgend wird die Erfindung anhand einer lediglich ein Ausführungsbeispiel darstellenden Zeichnung näher erläutert.

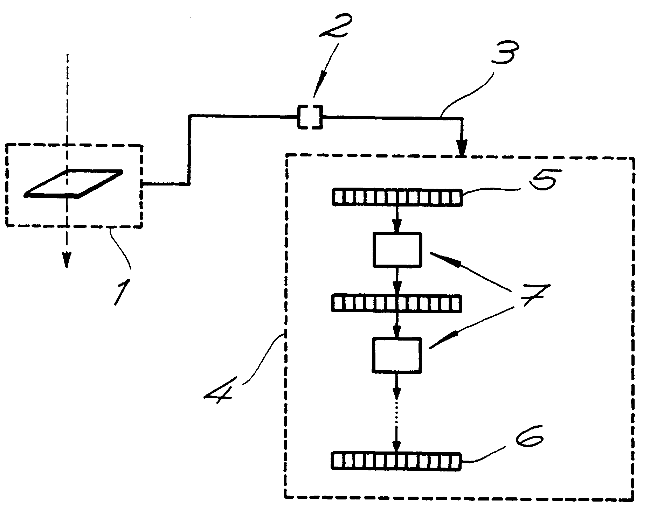

Die einzige Figur zeigt eine Vorrichtung zur Durchführung des erfindungsgemäßen Verfahrens.

Die aus zufälligen physikalischen Ereignissen, insbes. aus physikalischen Zerfallsvorgängen, resultierenden stochastischen Signale werden mit einer Empfangseinrichtung 1 registriert. Im Ausführungsbeispiel mag es sich bei den Signalen um Zerfallsprodukte eines radioaktiven Zerfalls handeln, die mit der als Detektor ausgeführten Empfangseinrichtung 1 registriert werden. Diese Signale werden zweckmäßigerweise zu elektronischen Daten bzw. Signalen verarbeitet, die über eine Schnittstelle 2 mittels der Datenleitung 3 einem Zufallszahlengenerator 4 eines Rechenwerks zugeführt werden. Es liegt auch im Rahmen der Erfindung, daß die elektronischen Daten bzw. Signale dem Zufallszahlengenerator 4 drahtlos zugeführt werden. Die Signale werden von dem Zufallszahlengenerator 4 als Eingangsparameter gewertet. Der Zufallszahlengenerator ist in der Figur lediglich rein schematisch dargestellt und weist ein Eingangsregister 5, ein Ausgangsregister 6 sowie einen mathematischen Algorithmus 7 auf. In dem Zufallszahlengenerator 4 werden die stochastischen Eingangsparameter zu den Zufallszahlen verarbeitet. Die Folge der erzeugten Zufallszahlen ist nicht periodisch und weist eine stochastische Gleichverteilung auf. Es versteht sich, daß die Vorrichtung zur Durchführung des erfindungsgemäßen Verfahrens auch Sicherheitseinrichtungen aufweisen kann, die unbefugte Gerätemanipulationen erkennt bzw. anzeigt.

## Patentansprüche

1. Verfahren zur Erzeugung von Zufallszahlen, wobei aus terrestrischen und/oder extraterrestrischen zufälligen physikalischen Ereignissen, insbes. aus physikalischen Zerfallsvorgängen, resultierende stochastische Signale von einer Empfangseinrichtung registriert werden
und wobei die registrierten und ausgewerteten Signale einen Zufallszahlengenerator als stochastische Eingangsparameter zugeführt werden und in dem Zufallszahlengenerator mit einem Algorithmus zu Zufallszahlen verarbeitet werden.

2. Verfahren nach Anspruch 1, wobei als Signale die Zerfallsprodukte von natürlichen und/oder künstlichen Isotopen terrestrischen Ursprungs registriert werden.

3. Verfahren nach einem der Ansprüche 1 oder 2, wobei als Signale die Zerfallsprodukte aus Wechselwirkungen extraterrestrischer Strahlung mit der Erdmaterie registriert werden.

4. Verfahren nach einem der Ansprüche 1 bis 3, wobei die erzeugten Zufallszahlen mit einem Algorithmus auf ihre Qualität überprüft werden.
